Europäisches Patentamt

European Patent Office

Office européen des brevets

(11) Veröffentlichungsnummer: **0 157 144**
**A2**

## (12) EUROPÄISCHE PATENTANMELDUNG

(21) Anmeldenummer: **85101816.8**

(22) Anmeldetag: **20.02.85**

(51) Int. Cl.⁴: **G 03 B 9/02**

(30) Priorität: **31.03.84 DE 3412061**

(43) Veröffentlichungstag der Anmeldung: **09.10.85**
**Patentblatt 85/41**

(84) Benannte Vertragsstaaten: **AT CH FR GB LI**

(71) Anmelder: **ERNST LEITZ WETZLAR GMBH,
Ernst-Leitz-Strasse 30 Postfach 20 20,
D-6330 Wetzlar 1 (DE)**

(72) Erfinder: **Rühl, Friedel, Weingartenstrasse 24,
D-6330 Wetzlar-Naunheim (DE)**

(54) **Blendenlamellen.**

(57) Es werden Blendenlamellen für Irisblenden optischer Geräte mit je einem Lager- und einem Steuerzapfen beschrieben, bei denen als Lager- und/oder Steuerzapfen wenigstens ein Körper mit einer nach allen drei Koordinatenrichtungen gebogenen Führungsfläche vorgesehen ist. Der Körper ist auf der Lamellenoberfläche oder in einer in dieser eingebrachten Bohrung durch einen Schweiss- oder Klebevorgang oder ähnliches befestigt.

EP 0 157 144 A2

0157144

## Blendenlamellen

Die Erfindung betrifft Blendenlamellen für Irisblenden optischer Geräte mit je einem Lager- und Steuerzapfen.

Es ist bekannt, bei Blendenlamellen als Lager- und Steuerzapfen Zylindervoll- bzw. -hohlnieten zu verwenden. Nachteil dieser Zapfen ist es, daß aufgrund von Fertigungstoleranzen sowohl zwischen Lagerbohrung und Lagerzapfen als auch zwischen Steuerkurve und Steuerzapfen ein unerwünschtes Spiel entstehen kann, aus welchem ein toter Gang resultiert, der sich insbesondere bei kleinen Verstellbewegungen störend bemerkbar macht.

Zur Überwindung dieses Nachteils ist daher (beispielsweise in der DE-PS 10 58 834) bereits vorgeschlagen worden, Lager- und Steuerzapfen als Konus auszuführen, dessen größter Durchmesser größer als die lichte Weite der Steuerkurve bzw. größer als der Durchmesser der Lagerbohrung ist.

Ein genereller Nachteil beider Lager- und Steuerzapfenformen ist aber, daß sie sich nur mit einigem Aufwand senkrecht zu der Blendenlamelle befestigen lassen. Dies aber ist notwendig, um Verkantungen der Lager- bzw. Steuerzapfen in den Lagerbohrungen bzw. Steuerkurven der Irisblendenfassung zu vermeiden. Letztere macht sich durch das Übereinanderschieben der einzelnen Blendenlamellen beim Öffnen oder Schließen der Irisblende besonders durch eine erhöhte Reibung zwischen den Lagerelementen bemerkbar, die wiederum erhöhte Stellkräfte für die Blendenbewegung erforderlich macht.

Es ist daher Aufgabe der vorliegenden Erfindung, Blendenlamellen für Irisblenden optischer Geräte anzugeben, bei denen in allen Bewegungsstellungen und -lagen ein Abweichen der Achsen der Lager- und/oder Steuerzapfen von ihrer Soll-Lage ohne negative Auswirkung auf Reibung und Verstellkräfte bleibt und die außerdem bei kurzer Fertigungszeit kostensparend herstellbar sind.

Für Blendenlamellen der eingangs genannten Art wird diese Aufgabe erfindungsgemäß dadurch gelöst, daß als Lager- bzw. Steuerzapfen ein Körper mit einer nach allen drei Koordinatenrichtungen gebogenen Führungsfläche sowie mit kreisförmigem Querschnitt vorgesehen und auf der Blendenlamelle starr befestigt ist.

Vorteilhafte Ausgestaltungen des Erfindungsgegenstandes sind in den Unteransprüchen niedergelegt.

Die Erfindung ist in der Zeichnung in Ausführungsbeispielen schematisch dargestellt und im nachfolgenden näher beschrieben.

Es zeigen:

Fig. 1        eine Blendenlamelle in Draufsicht

Fig. 2 - 6    Ausführungsbeispiele der erfindungsgemäßen Blendenlamelle in längs der Linie I - I geschnittener Seitenansicht und

Fig. 7        ein weiteres Ausführungsbeispiel in geschnittener Seitenansicht und in Einzelheit.

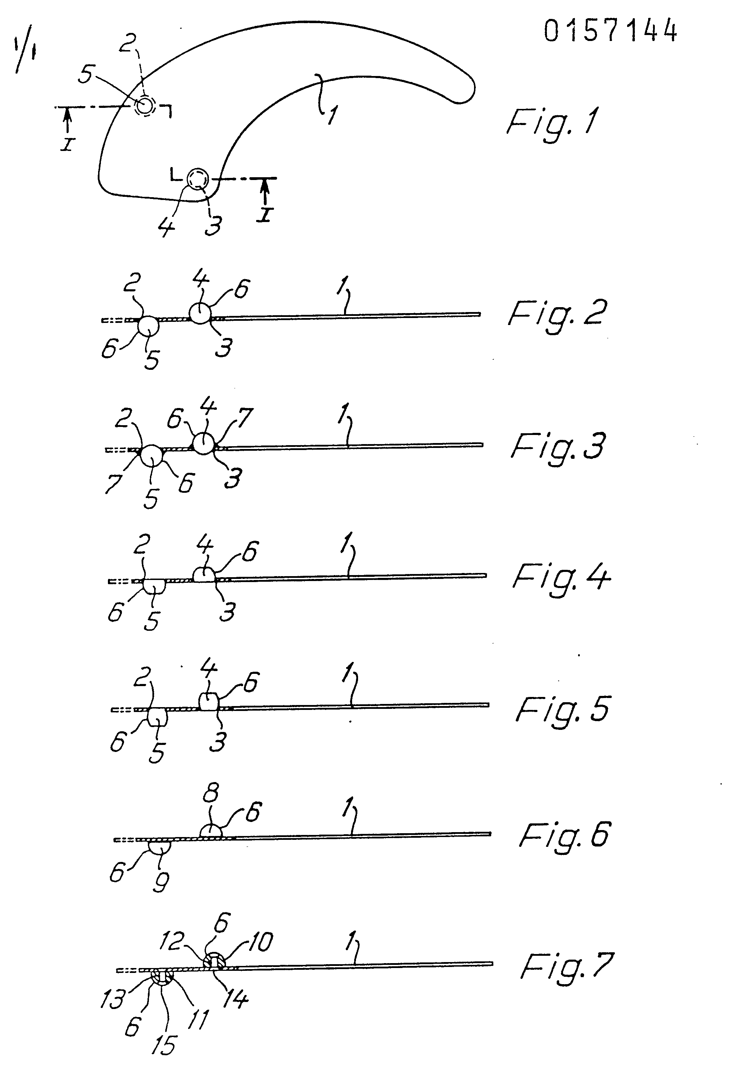

In den Figuren ist ein an seiner Außen- und Innenkante bogenförmiges Blatt 1 einer Blendenlamelle, beispielsweise für die Irisblende eines fotografischen Aufnahmeobjektivs, dargestellt. In den Figuren 1 - 4 und 6 ist dieses Blatt 1 mit Bohrungen 2,3 versehen, die zur Aufnahme eines Lagerzapfens 4 bzw. eines Steuerzapfens 5 dienen.

Beim Ausführungsbeispiel nach Fig. 2 sind als Lager- bzw. Steuerzapfen 4 bzw. 5 Kugeln verwendet, die nach Selbstzentrierung in den Bohrungen 2,3 durch Verschweißen befestigt sind.

Die sphärischen Führungsflächen 6 der Kugeln bieten den Vorteil, daß der Lagerzapfen 4 in der Lagerbohrung und der Steuerzapfen 5 in der Steuerkurve der hier nicht mit dargestellten Irisblendeneinheit nur ringförmig bzw. an zwei Seiten nur punktförmig anliegt und daß dadurch eventuelle Verkippungen und Verkantungen (durch äußere Einflüsse) ohne Auswirkung auf die Verstellkräfte bleiben, da die Reibung zwischen Lagerzapfen 4 und Lagerbohrung einerseits bzw. Steuerzapfen 5 und Steuerkurve andererseits sich nicht ändern. Wie in Fig. 3 angedeutet, ist auch eine Befestigung der als Lager- bzw. Steuerzapfen 4 bzw. 5 dienenden Kugeln durch Verkittung oder Verklebung möglich. Dazu werden die Bohrungen 2,3 mit Kitt oder Kleber gefüllt und die Kugeln eingelegt. Ein sich dabei bildender Kitt- oder Kleberkragen 7 erhöht die Festigkeit der Verbindung zwischen Kugeln und Lamellenblatt 1.

Beim Ausführungsbeispiel nach Fig. 4 sind als Lager- bzw. Steuerzapfen 4,5 Kugelzonenkörper, d.h. Kugeln mit sich gegenüberliegenden Abflachungen, verwendet. Die Befestigung dieser Körper in den Lagerbohrungen 2, 3 erfolgt ebenfalls durch Verschweißen oder Verkleben. Der Vorteil dieser Ausführungsform neben dem oben Beschriebenen ist durch die größere Lichtdichtigkeit der aus solchen Blendenlamellen gebildeten Irisblende gegeben, da die einzelnen Lamellenblätter besser beieinander liegen können.

Als weiteres Ausführungsbeispiel zeigt Fig. 5 Lager- bzw. Steuerzapfen 4,5, deren Führungsflächen 6 asphärisch, beispielsweise als Ellipsoid, gestaltet sind. Ihre Befestigung erfolgt in bereits beschriebener Weise.

Nach Fig. 6 können auch Kugelkappen oder -kalotten 8,9 als Lager- bzw. Steuerzapfen 4,5 verwendet und mit ihren Grundflächen durch Verschweißen oder Verkleben auf der Oberfläche des Blattes 1 der Blendenlamellen befestigt werden.

Auch ist es möglich, wie im Ausführungsbeispiel der Fig. 7 dargestellt, die neuen Lager- bzw. Steuerzapfen 4,5 mit dem Lamellenblatt 1 zu vernieten. Dazu sind Kugelkappen oder -kalotten 10,11 gezeigt, deren Zentrum eine Nietbohrung 12,13 zur Aufnahme eines Nietes 14,15 trägt.

Neben einer Kostenersparnis bei Fertigung der Verbindung Lamelle-Lagerzapfen bzw. Lamelle-Steuerzapfen durch Verschweißen oder Verkleben wirkt sich gravierend der bereits oben geschilderte Vorteil der verminderten Reibung in den Lager- bzw. Steuerstellen durch Verwendung der Körper mit nach allen drei Koordinatenrichtungen gebogenen Führungsflächen aus. Letztere stellen im übrigen sicher, daß bei Verkippen oder Verkanten der Blendenlamellen die Funktion der gesamten Irisblende kaum beeinträchtigt wird.

Als weiterer Vorteil ist zu vermerken, daß sich die neuen Blendenlamellen wesentlich leichter in den Lamellenboden bzw. -führungsring einlegen und orientieren lassen als die bisher bekannten Blendenlamellen. Die Erfindung gestattet es auch, Lager- bzw. Steuerzapfen zu verwenden, die aus nichtmetallischen Werk-

0157144

stoffen gefertigt sind. Insbesondere sei hier an solche aus Kunststoff, Glas und Glaskeramik erinnert.

A n s p r ü c h e

1. Blendenlamellen für Irisblenden optischer Geräte
   mit je einem Lager- und einem Steuerzapfen,
   d a d u r c h   g e k e n n z e i c h n e t ,
   daß als Lager- (4,8,10) und/oder Steuerzapfen (5,9,
   11) wenigstens ein Körper mit einer nach allen drei
   Koordinatenrichtungen gebogenen Führungsfläche (6)
   und kreisförmigem Querschnitt vorgesehen ist.

2. Blendenlamellen nach Anspruch 1,   d a d u r c h
   g e k e n n z e i c h n e t ,   daß die Führungsfläche (6) von Lager- (4,8,10) und/oder Steuerzapfen (5,9,11) sphärisch ausgebildet ist.

3. Blendenlamellen nach Anspruch 1,   d a d u r c h
   g e k e n n z e i c h n e t ,   daß die Führungsfläche (6) von Lager- (4,8,10) und/oder Steuerzapfen (5,9,11) asphärisch geformt ist.

4. Blendenlamellen nach den Ansprüchen 1 bis 3,
   d a d u r c h   g e k e n n z e i c h n e t ,   daß
   der Körper (4,5) einseitig abgeflacht ist (Fig. 4,
   6 und 7).

5.  Blendenlamellen nach den Ansprüchen 1 bis 4,
    d a d u r c h   g e k e n n z e i c h n e t ,   daß
    Lager- (4,8,10) und/oder Steuerzapfen (5,9,11) auf
    der Oberfläche der Blendenlamelle  (1) befestigt
    sind (Fig. 6 u. 7).

6.  Blendenlamellen nach den Ansprüchen 1 bis 4,
    d a d u r c h   g e k e n n z e i c h n e t ,   daß
    der Lager- (4) und/oder der Steuerzapfen (5) in einer Bohrung (2,3) der Blendenlamelle (1) angeordnet
    ist (Fig. 2-5).

7.  Blendenlamellen nach einem der vorangegangenen An-
    sprüche,   d a d u r c h   g e k e n n z e i c h -
    n e t ,   daß die Lage von Lager- (4) und/oder
    Steuerzapfen (5) auf der Blendenlamelle (1) durch
    Selbstzentrierung festgelegt ist (Fig. 2, 3 u. 5).

8.  Blendenlamellen nach den Ansprüchen 1 bis 6,
    d a d u r c h   g e k e n n z e i c h n e t ,   daß
    der Lager- (4,8,10) und/oder Steuerzapfen (5,9,11)
    mittels Schweißen der Blendenlamelle (1) verbunden
    ist (Fig. 2 u. 5)

9.  Blendenlamellen nach den Ansprüchen 1 bis 6,
    d a d u r c h   g e k e n n z e i c h n e t ,   daß
    Lager- (4,8,10) und/oder Steuerzapfen (5,9,11) und
    Blendenlamelle (1) miteinander verklebt sind.

10. Blendenlamellen nach den Ansprüchen 1 bis 6,

    d a d u r c h   g e k e n n z e i c h n e t ,

    daß Lager- (10) und/oder Steuerzapfen (11) mit der Blendenlamelle (1) vernietet sind (Fig. 7).


11. Blendenlamelle nach den Ansprüchen 1 bis 4,

    d a d u r c h   g e k e n n z e i c h n e t ,

    daß Lager- (4,8,10) und/oder Steuerzapfen (5,9,11) aus nichtmetallischem Material verwendet sind.

0157144

Fig.1

Fig.2

Fig.3

Fig.4

Fig.5

Fig.6

Fig.7